Europäisches Patentamt

European Patent Office

Office européen des brevets

(11) Publication number: **0 438 296 A2**

(12) # EUROPEAN PATENT APPLICATION

(21) Application number: **91300334.9**

(51) Int. Cl.⁵: **F16L 21/08**

(22) Date of filing: **17.01.91**

(30) Priority: **17.01.90 JP 7976/90**

(43) Date of publication of application:
**24.07.91 Bulletin 91/30**

(84) Designated Contracting States:
**AT BE CH DE DK ES FR GB GR IT LI LU NL SE**

(71) Applicant: **Inoue, Hachiro**
**13-10, Kokubun 4-chome**
**Ichikawa-shi, Chiba-ken (JP)**

(72) Inventor: **Inoue, Hachiro**
**13-10, Kokubun 4-chome**
**Ichikawa-shi, Chiba-ken (JP)**

(74) Representative: **Humphreys, Ceris Anne et al**
**Abel & Imray Northumberland House 303-306**
**High Holborn**
**London WC1V 7LH (GB)**

(54) **Interface joint for cylindrical members.**

(57)  An interface joint for cylindrical members comprises an overlap of cylindrical members to be joint to each other at an inter face therebetween. Respective ends of the cylindrical member (1,2) forming the overlap is formed with grooves (5,6) at mating surfaces and extending circumferentially. The grooves are cooperative to define a interlock receptacle (7). The outer side segment of the overlap is formed with at least one insert port which is in communication with the interlock receptacle and extends in tangential direction with respect to the interlock receptacle. A flexible and elongated interlock (8) is inserted through the insert port into the interlock receptacle so that it is tightly fitted onto the inner periphery of the interlock receptacle.

EP 0 438 296 A2

# FIG. 1

## INTERFACE JOINT FOR CYLINDRICAL MEMBERS

### BACKGROUND OF THE INVENTION

#### Field of the Invention

The present invention relates generally to an interface joint for a cylindrical members, such as pipes, cylinders, piles, beams and so forth. More specifically, the invention relates to an interface joint structure for joining cylindrical members with simple construction and simple operation.

#### Description of Background Art

In the prior art, there have been a plurality of mutually different types of joints for joining cylindrical members, such as pipes, piles, beams. cylinders and so forth, in axial direction. One of the prior art joint constructions forms joint by means of bolts and nuts for rigidly connecting cylindrical members by tightening bolts and nuts. Another prior joint construction comprises thread engagement between the opposing ends of the cylindrical members. A further alternative joint structure comprises a coupler which is engageable with the flanges formed at axial ends of the cylindrical members. A still further prior joint structure comprises a cotter pins.

In such prior art joints are not at all convenient for use since in most case such joints are used not at the factories but at site of construction. Namely, joints employing bolts and nuts requires bolt tightening operation for lots of bolts at the site. This is cumbersome work to be done at the site. Therefore, joining of cylindrical members by means of bolts and nuts at the site requires substantial working time and thus is inefficient. On the other hand, when the thread joint for threadingly engaging the opposing ends of the cylindrical member may also requires lots of work. In particular, when the cylindrical members to be joined has relatively large diameter, threading cylindrical member becomes difficult and not practical.

In many case, necessity of joining cylindrical member to obtain a desired length occurs at various outdoor field, such as civil construction site, building site and so forth. For instance, in the civil construction site, it is often required to join tremy pipes. Also, in building site of sequential wall, it becomes necessary to join interlocking pipes. Also, in pipeline construction, it is, off course, necessary to join lots of pipes. Furthermore, in waterway construction, it becomes necessary to join pipes. In addition to the above, it is also required for cylindrical members which are subject rotational or twisting torques, such as casings In Venoto method, drilling pipes, drilling casing and so forth. In such case, the joints for joining the cylindrical members may be subject substantial torsional torque and thus are required substantial strength. As can be appreciated, at the site, it is strongly required to efficiently join the cylindrical members so that work in the site can be satisfactorily efficient.

At the present, non of the prior proposed methods of joining cylindrical members are satisfactorily efficient in terms of implementation at various fields or sites. Therefore, it has been required method which can efficiently and durably join cylindrical members.

### SUMMARY OF THE INVENTION

Therefore, it is an object of the present invention to provide a unique and novel joint structure for joining interface of cylindrical members.

Another object of the invention is to provide an interface joint for a cylindrical member which is simple in construction and convenient for use at various sites.

In order to accomplish aforementioned and other objects, an interface joint for cylindrical members, according to the present invention, comprises an overlap of cylindrical members to be joint to each other at an inter face therebetween. Respective ends of the cylindrical members forming the overlap is formed with grooves at mating surfaces and extending circumferentially. The grooves are cooperative to define a interlock receptacle. The outer side segment of the overlap is formed with at least one insert port which is in communication with the interlock receptacle and extends in tangential direction with respect to the interlock receptacle. A flexible and elongated interlock is inserted through the insert port into the interlock receptacle so that it is tightly fitted onto the inner periphery of the interlock receptacle.

According to one aspect of the invention, an interface joint for cylindrical members comprises :

an overlap formed between ends of cylindrical members to be connected, the overlap having mating surfaces oriented in radially opposed relationship to each other ;

an interlock receptacle opening defined between mating surfaces of the overlap and extending in circumferential direction ;

at least one insert opening which opens to outside of the overlap and is in communication with the interlock receptacle opening, the insert opening extending essentially in tangent with respect to the axis of the interlock receptacle opening ; and

at least one flexible and generally elongated cylindrical interlocking member inserted into the interlock receptacle opening through the insert opening for establishing interlocking between the cylindrical members resisting against thrusting force exerted onto the cylindrical members.

In the preferred construction, the interlocking member may comprise a coil spring. The interface joint may further comprise a retainer associated with the insert opening for retaining the interlocking member within the interlock receptacle opening. In one embodiment, the retainer comprises a retainer strip rigidly secured on the inner periphery of the insert opening and having a retainer edge, to which the end of the interlocking member resiliently engages after completely inserted. Alternatively, the retainer may also comprise a retainer block connected to the end of the interlocking member and fastened onto the inner periphery of the insert opening by means of a threaded fastener. In the further alternative, the retainer may comprise a retainer surface defined as a part of the inner periphery of the insert opening and extending in a direction offset from the axis of the insert opening extending in tangent with respect to the axis of the interlock receptacle opening, the retainer surface receiving the end of the interlocking member and establishing frictional engagement therewith.

The interface joint may further comprise an axially extending key formed integrally with one of the cylindrical member and a key receptacle recess formed in the other cylindrical member, the key and key receptacle recess being interengaged with each other for preventing the cylindrical members from causing relative angular displacement with each other for co-rotation.

According to another aspect of the invention, a method for joining cylindrical members comprises the steps of :

forming an overlap between ends of cylindrical members to be connected, the overlap having mating surfaces oriented in radially opposed relationship to each other ;

defining an interlock receptacle opening between mating surfaces of the overlap and extending in circumferential direction ;

forming at least one insert opening which opens to outside of the overlap and is in communication with the interlock receptacle opening, the insert opening extending essentially in tangent with respect to the axis of the interlock receptacle opening ; and

inserting at least one flexible and generally elongated cylindrical interlocking member into the interlock receptacle opening through the insert opening for establishing interlocking between the cylindrical members resisting against thrusting force exerted onto the cylindrical members.

The interlock receptacle opening may be defined a pair of grooves formed on respective of the mating surface in substantially overall circumference of the cylindrical members.

If necessary, such as for substantially large diameter cylindrical member, a plurality of the insert openings may be formed with a given intervals and a plurality of the interlocking members having essentially corresponding to the circumferential length of the interval is inserted into the interlock receptacle opening through respective insert openings. Furthermore, the interlocking member may comprise a coil spring.

According to a further aspect of the invention, an interlocking for connecting a pair of cylindrical members which overlaps at the ends to be connected and defines a groove between mating surfaces at the overlapping portion, the groove extending circumferentially in essentially overall circumference, and the groove being accessible through an insert opening extending in tangent with respect to the curvature of the groove, comprises :

a coiled flexible interlocking member having an external diameter substantially in conformance with the groove for firm fitting, the interlocking member having cross-sectional peripheral wall thickness determined in terms of a desired shearing resistance.

BRIEF DESCRIPTION OF THE DRAWINGS

The present invention will be understood more fully from the detailed description given herebelow and from the accompanying drawings of the present invention which, however, should not be taken to limit the invention to the specific embodiments, but are for explanation and understanding only.

In the drawings :

Fig. 1 is a section of a faucet joint in which the preferred embodiment of an interface joint is applied;

Fig. 2 is a section taken along line A - A of Fig. 1;

Fig. 3 is a side elevation of the faucet joint of Fig. 1 ;

Figs. 4(A) and 4(B) are sections showing variation of flexible interlocks to be employed in the preferred embodiment of the interface joint of Figs. 1, 2 and 3 ;

Fig. 5 is an enlarged section of an insert port in the preferred embodiment of the interface joint of Figs. 1, 2 and 3 ;

Figs. 6(A) and 6(B) are an enlarged section similar to Fig. 5 but showing modification of a retainer structure for retaining the flexible interlock in a interlock receptacle ;

Fig. 7 is an enlarged section of the interface joint of the invention ;

Figs. 8(A) and 8(B) are sections showing interface joints employing couplers, in which the preferred embodiment of an interface joint, according to the present invention is applicable ;

Fig. 9 is a section showing application of interface joint in coupler type joint which is used with seal structure ;

Fig. 10 is a side elevation of an interface joint which is applied for cylindrical members subjecting rotational torque ;

Fig. 11 is a partial section showing joint portion as sectioned along line B - B in Fig. 10 ; and

Figs. 12 and 13 are similar views to Figs. 10 and 11 but showing modified construction of the interface joint which is applicable for cylindrical members subjecting rotational torque.

## DESCRIPTION OF THE PREFERRED EMBODIMENT

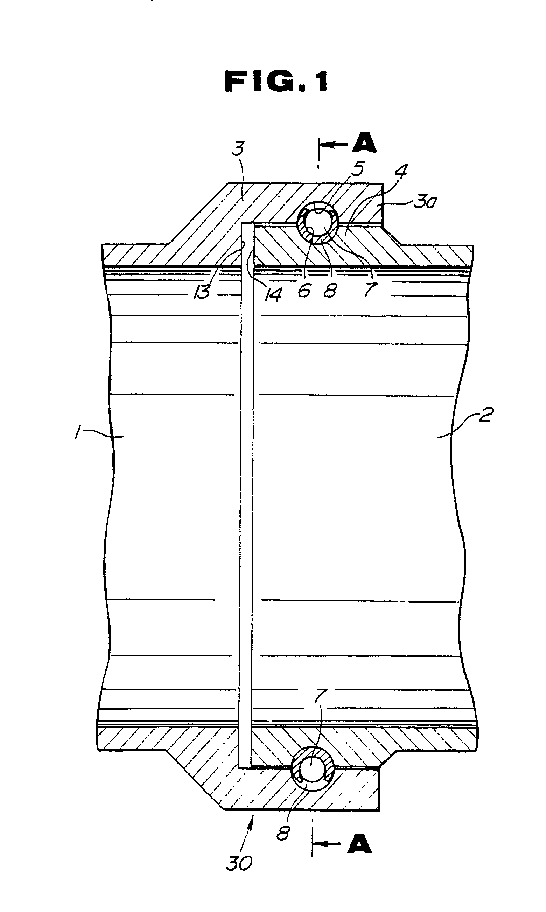

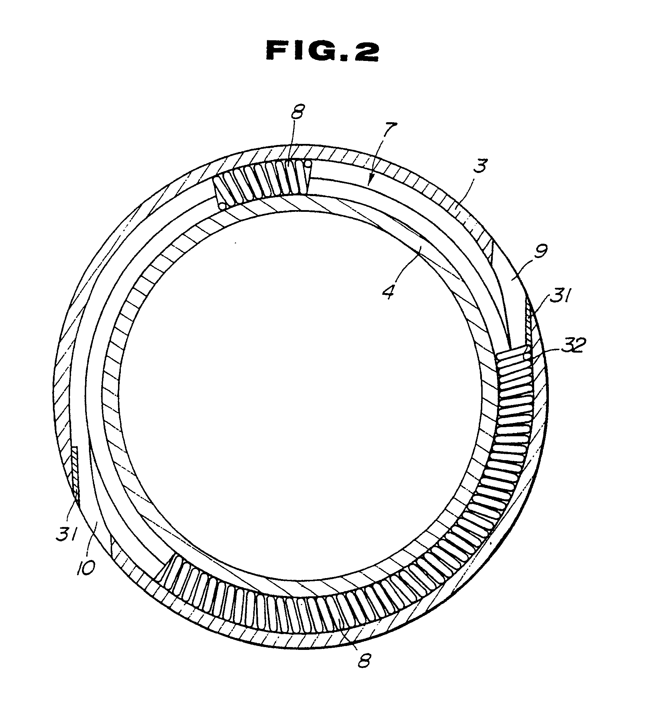

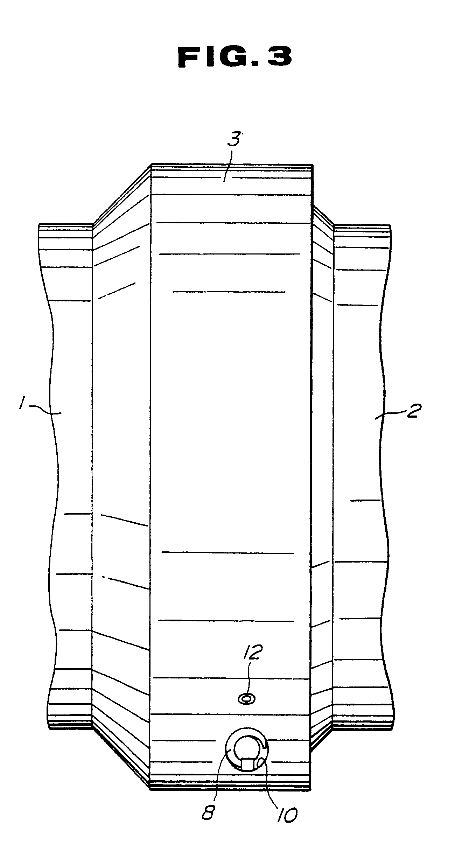

Referring now to the drawings, particularly to Figs. 1 through 6, the preferred embodiment of an interface joint is illustrated in terms of application for faucet joint for joining pipes 1 and 2. The pipe 1 is formed with a collar flange 3 having greater internal diameter than that of general part of the pipe. As can be seen from Fig. 1, the cylindrical section 3a of the collar flange 3 has greater thickness than the general section of the pipe. On the other hand, the pipe 2 has an end piece section 4 which has a greater thickness than that of the general section of the pipe 2. The external diameter of the end piece section 4 is essentially in conformance with the internal diameter of the collar flange 3 of the pipe 1 for forming faucet joint. When the pipes 1 and 2 are to be joined, the end piece section 4 of the pipe 2 is inserted into the collar flange 3 of the pipe 1 to form an overlap 30 with mating axial ends 13 and 14.

As can be seen, the collar flange 3 is formed with a cross-sectionally semi-circular groove 5 which extends in circumference on the inner periphery thereof. Similarly, the end piece section 4 of the pipe 2 is formed of a cross-sectionally semi-circular groove 6 extending circumferentially on the outer periphery thereof. The grooves 5 and 6 are oriented at axial positions so as they can form cross-sectionally circular interlock receptacle opening 7 when the end piece section 4 is disposed within the interior space of the collar flange 3.

The collar flange 3 is further formed of one or more tangentially extending interlock insert openings 9. The interlock insert openings 9 have axes respectively extending in tangent direction of the interlock receptacle opening 7 and communicated with the latter. A flexible essentially cylindrical interlocking member 8 is inserted into the interlock receptacle opening 7 via the interlock insert opening 9. The interlocking member 8 has essentially equal diameter to that of the interlock receptacle opening 7 for establishing firm fitting onto the inner periphery thereof.

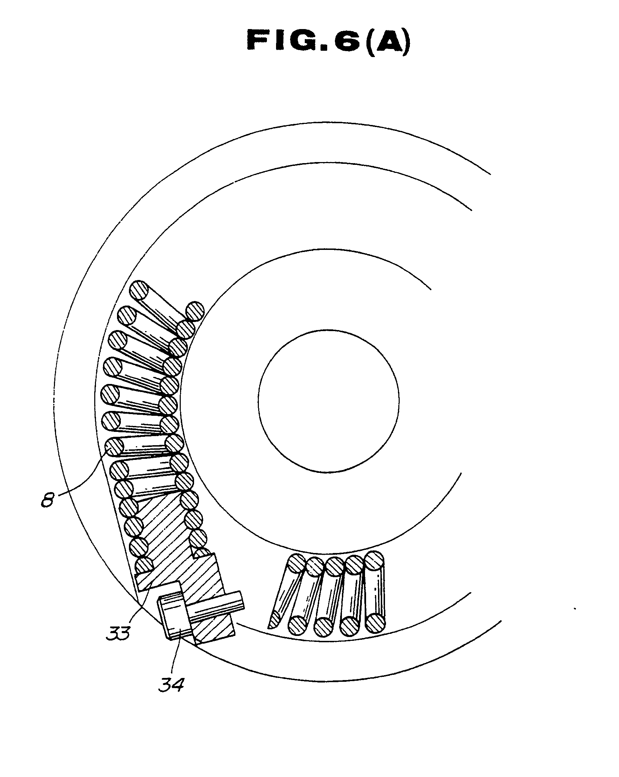

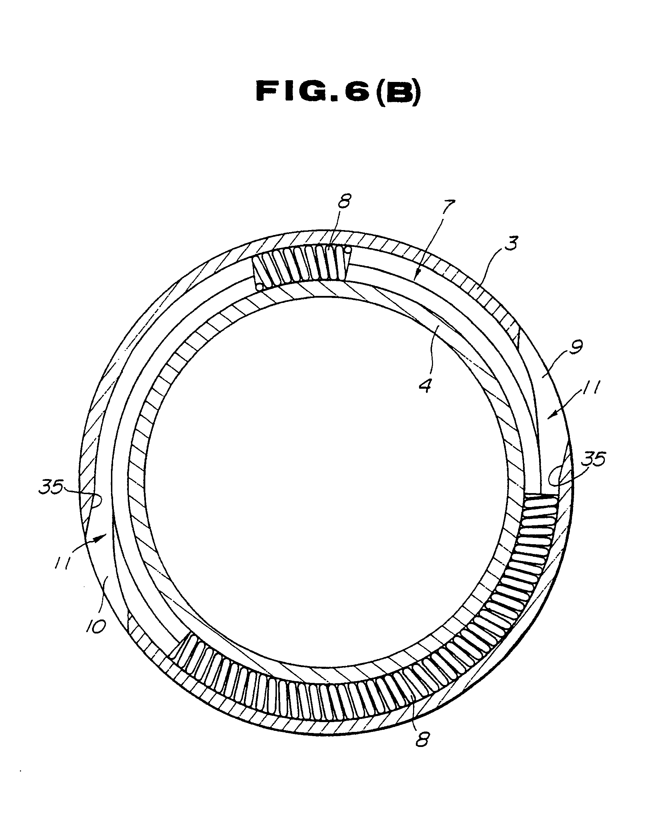

The material of the interlocking member 8 may be selected in view of the material of the cylindrical members 1 and 2 to be connected. Also, the diameter of the interlocking member 8 can be selected depending upon the required strength of connection. It should be appreciated that though the interlocking member 8 can be formed with solid cylindrical member, it can also be formed by coiled spring. For this, discussion for compression strength and shearing strength will be given with reference to Fig. 6. Assuming that the material of the pipes 1 and 2 and the interlocking member 7 are selected to have equal shearing stress and compression stress, that the radius of the cylindrical interlocking member 7 is r, and assuming that the thrusting force exerted between the pipes 1 and 2 is $P_1$, Assuming that the material of the pipes 1 and 2 and the interlocking member 7 are selected to have equal shearing stress and compression stress, that the radius of the cylindrical interlocking member 7 is r, the compression force to be exerted on the outer periphery of the interlocking member 7 at a unit length W , the compression force $P_c$ to be exerted on the outer periphery of the interlocking member 7 at a unit length W can be expressed by :

$$P_c = r{\cdot}P_1{\cdot}W \quad (1)$$

On the other hand, when the thrusting force $P_1$ is exerted, shearing force balancing with the compression force is induced at the interlocking member 7. Since the shearing stress on the interlocking member 7 is received by the diameter of the cylindrical interlocking member 7, the shearing force $P_s$ to be exerted on the interlocking member 7 in response to the thrusting force $P_1$ can be expressed by :

$$P_s = 2r{\cdot}P_2{\cdot}W \quad (2)$$

wherein $P_2$ is balancing shearing force to be exerted on the interlocking member.

As far as equilibrium state is established, the compression force $P_c$ and the shearing force $P_s$ are balanced to each other, the following equations can be established :

$$P_c = P_s$$
$$= r{\cdot}P_1{\cdot}W = 2r{\cdot}P_1{\cdot}W \quad (3)$$

From the equation (3), it can be said that the balancing shearing force to be exerted on the interlocking member is half of the compression force exerted on the outer periphery of the interlocking member. Since the reacting force is thus exerted on the inner periphery of the interlock receptacle opening as compression force, the shearing stress required for the interlocking member 7 becomes half of the compression stress. Therefore, even at the same material, the interlocking member can have enough shearing stress in relation to the compression stress on the pipes. Therefore, effective diameter can theoretically reduced to be half of overall diameter of the interlocking member. That is the hollow construction of the interlocking member 7 can be used in place of the solid interlocking member. Providing this, in view of providing sufficient flexibility, the interlocking member 7 may be formed by coiled spring. The coil spring type interlocking member 7 as illustrated is advantageously introduced in the present invention for ease of holding flexibility even at relatively large diameter in the interlocking member.

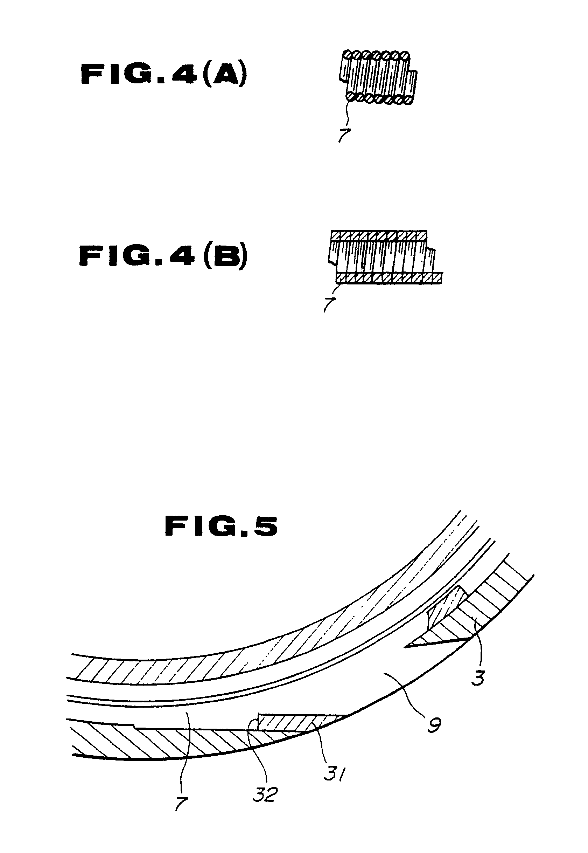

As shown in Figs. 4(A) and 4(B), the coil spring type interlocking member 7 can be made from a circular close-section wire, such as piano wire, or from polygon cross-section wire.

As shown in Fig. 5, a retainer piece 31 is rigidly secured at the inlet of the interlock insert opening 9. The retainer piece 31 has a retainer edge 32 for which the interlocking member 8 resiliently engages with its own resilient force normally biasing toward straight. Therefore, once the interlocking member 8 is inserted into the interlock receptacle opening, it may not looses out. Though the interlock retaining constriction as shown in Fig. 5 is preferred for convenience, various constriction may be employed in place. For instance, as shown in Fig. 6(A), it is possible to employ a retainer block 33 which is connected to the end of the interlocking member 7. The retainer block 33 is fastened onto the inner periphery of the interlock inserting opening 9 by means of fastening bolt 34. Such construction may be particularly useful when connection and disconnection of pipes in frequently required. Also, as shown in Fig. 6(B), the interlock inserting opening can be formed to have greater cross-sectional area than that of the interlocking member 7. In such case, the interlocking member 7 may frictionally engage with a portion 35 of the inner periphery of the interlock inserting opening 9 with resilient biasing force of the interlocking member 7 per se.

In the shown embodiment, connection of the pipes 1 and 2 is implemented in a manner discussed herebelow.

Upon connecting the pipes 1 and 2, the end piece section 4 of the pipe 2 is, at first, inserted into the collar flange 3 of the pipe 1 so that the the ends 13 and 14 mates in face to face relationship. Therefore, the collar flange 3 and the end piece section 4 forms overlap 20 in a form of faucet joint. At this position, the semi-circular grooves 5 and 6 oppose to each other to form the interlock receptacle opening 7. Thereafter, the interlocking member 7 is inserted through the interlock inserting opening 9. Insertion of the interlocking member 7 may be smoothly performed with flexibility of the interlocking member. At the end of insertion, the end of the interlocking member 8 comes into engagement with the retainer edge 23 of the retainer piece 23.

It should be noted that the shown embodiment employs one piece interlocking member to extend substantially overall circumference of the pipes, it is of course possible to separate the inner locking member into two or more pieces. Therefore, depending upon number of the interlocking members to be used, number of the interlock insertion openings 9 can be varied

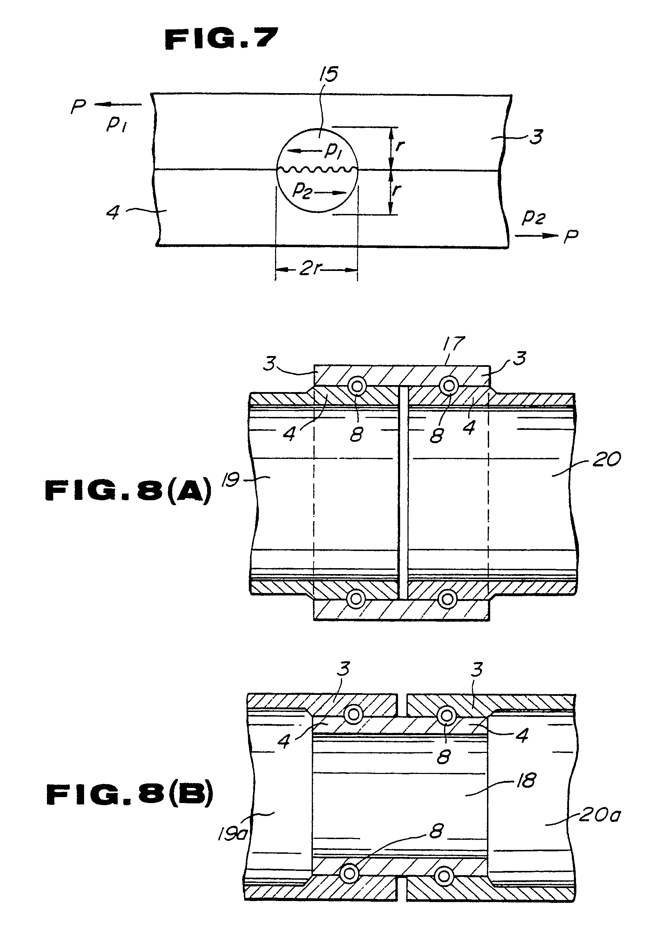

Figs. 8(A) and 8(B) show another application of the interface joint according to the present invention. In this embodiment, essentially cylindrical couplers 17 and 18 are used in place of the collar flange 3 in the former embodiment. As can be seen from Fig. 8(A) and 8(B), the couplers 17 and 18 can be externally or internally fitted on the end piece sections 4 of the pipes 19, 20 and 19a, 20a. As can be seen, the couplers 17 and 18 respectively form overlaps 20 with the interlock receptacle openings 9. The interlocking member 8 as discussed with respect to the former embodiment is used to be inserted into the interlock receptacle opening 9 so as to establish interlock between the pipes 19, 20 and 19a, 20a and the associated couplers 17 and 18.

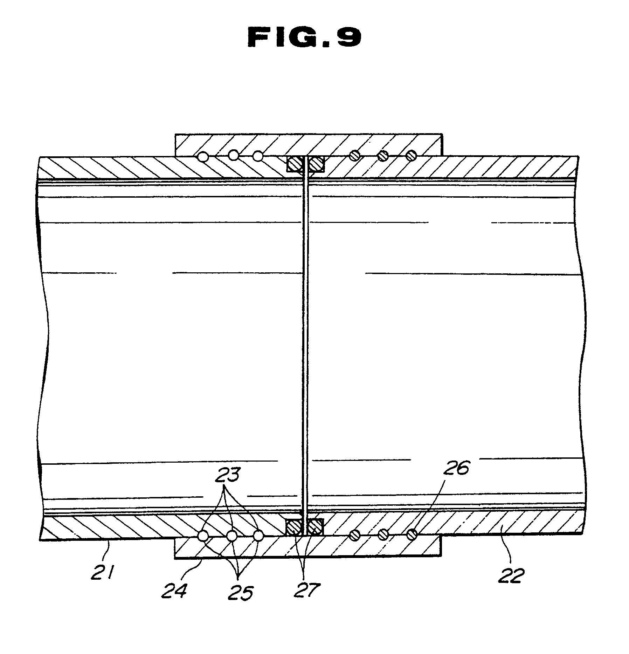

Fig. 9 shows a further embodiments of the interface joint according to the present invention. In this embodiment, three solid interlock members 35 are disposed within three interlock receptacle openings 33 defined between the coupler cylinder 34 and the pipes 31. The shown embodiment is further featured in presence of a seal rings 37 at mutually mating ends of the pipes 32.

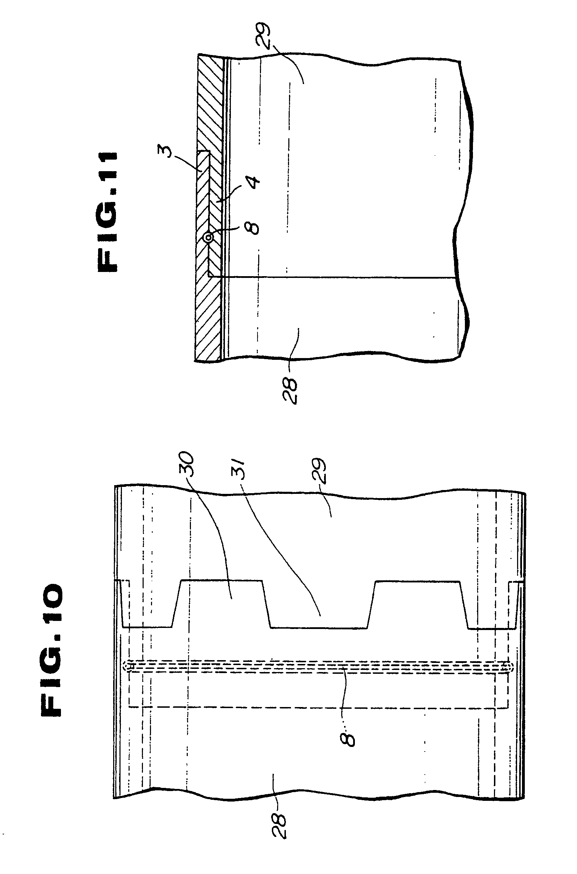

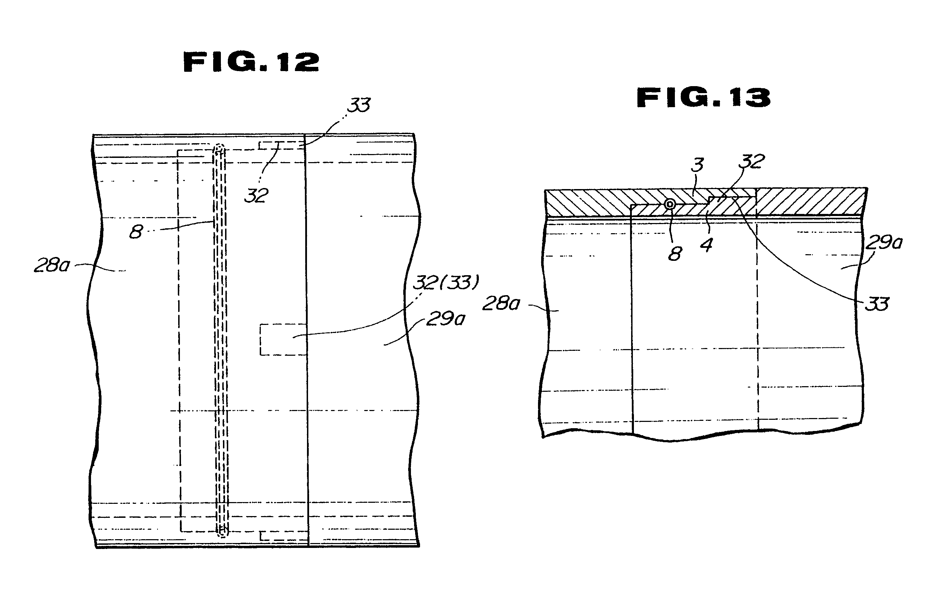

In the shown embodiments of the interface joints as set forth above, the joints per se are not resistive against relative rotation between the pipes connected to each other. Therefore, when the joined pipes are subject rotational torque, relative rotation can be caused. In order to prevent the pipes from relatively rotating in response to the rotational torque, the present invention employs axial protections 40 and 41 engaging to each other as shown in Figs. 10 and 11 and Figs. 12 and 13. The interengaging projections 40 and 41 can successfully prevent relative motioned between the pipes 28 and 29.

With this constriction, the interface joint, according to the present invention becomes applicable for the pipes which are subject rotational torque.

While the present invention has been discussed in terms of the preferred embodiment of the invention, the invention can be implemented in various fashions and constructions. Therefore, all possible embodiments and modifications which can be implemented without departing from the principle of the invention which have been set out in the appended claims.

For example, though the foregoing embodiment employs single coiled spring form interlocking member, one or more smaller diameter interlocking member to form morality layer construction if greater shearing strength is required. Furthermore, needless to say, the interface joint according to the present invention is applicable not only for joining pipes but for any cylindrical members, such as piles, cylindrical beams, cylinders and so forth.

**Claims**

1. An interface joint for cylindrical members comprising :

an overlap formed between ends of cylindrical members to be connected, said overlap having mating surfaces oriented in radially opposed relationship to each other ;

an interlock receptacle opening defined between mating surfaces of said overlap and extending in circumferential direction ;

at least one insert opening which opens to outside of said overlap and is in communication with said interlock receptacle opening, said insert opening extending essentially in tangent with respect to the axis of said interlock receptacle opening ; and

at least one flexible and generally elongated cylindrical interlocking member inserted into said interlock receptacle opening through said insert opening for establishing interlocking between said cylindrical members resisting against thrusting force exerted onto said cylindrical members.

2. An interface joint as set forth in claim 1, wherein said interlocking member comprises a coil spring.

3. An interface joint as set forth in claim 1, which further comprises a retainer associated with said insert opening for retaining said interlocking member within said interlock receptacle opening.

4. An interface joint as set forth in claim 3, wherein said retainer comprises a retainer strip rigidly secured on the inner periphery of said insert opening and having a retainer edge, to which the end of said interlocking member resiliently engages after completely inserted.

5. An interface joint as set forth in claim 3, wherein said retainer comprises a retainer block connected to the end of said interlocking member and fastened onto the inner periphery of said insert opening by means of a threaded fastener.

6. An interface joint as set forth in claim 3, wherein said retainer comprises a retainer surface defined as a part of the inner periphery of said insert opening and extending in a direction offset from the axis of said insert opening extending in tangent with respect to the axis of said interlock receptacle opening, said retainer surface receiving the end of said interlocking member and establishing frictional engagement therewith.

7. An interface joint as set forth in claim 1, which further comprises an axially extending key formed integrally with one of said cylindrical member and a key receptacle recess formed in the other cylindrical member, said key and key receptacle recess being interengaged with each other for preventing said cylindrical members from causing relative angular displacement with each other for co-rotation.

8. A method for joining cylindrical members comprising the steps of :

forming an overlap between ends of cylindrical members to be connected, said overlap having mating surfaces oriented in radially opposed relationship to each other ;

defining an interlock receptacle opening between mating surfaces of said overlap and extending in circumferential direction ;

forming at least one insert opening which opens to outside of said overlap and is in communication with said interlock receptacle opening, said insert opening extending essentially in tangent with respect to the axis of said interlock receptacle opening ; and

inserting at least one flexible and generally elongated cylindrical interlocking member into said interlock receptacle opening through said insert opening for establishing interlocking between said cylindrical members resisting against thrusting force exerted onto said cylindrical members.

9. A method as set forth in claim 8, wherein said interlock receptacle opening is defined a pair of grooves formed on respective of said mating surface in substantially overall circumference of said cylindrical members.

10. A method as set forth in claim 8, wherein a plurality of said insert openings are formed with a given intervals and a plurality of said interlocking members having essentially corresponding to the circumferential length of said interval is inserted into said interlock receptacle opening through respective insert openings.

11. A method as set forth in claim 8, wherein said interlocking member comprises a coil spring.

12. An interlocking for connecting a pair of cylindrical members which overlaps at the ends to be connected and defines a groove between mating surfaces at the overlapping portion, said groove extending circumferentially in essentially overall circumference, and, said groove being accessible through an insert opening extending in tangent with respect to the curvature of said groove, said interlocking comprising :

a coiled flexible interlocking member having an external diameter substantially in conformance with said groove for firm fitting, said interlocking member having cross-sectional peripheral wall thickness determined in terms of a desired shearing resistance.

# FIG. 1

# FIG.2

# FIG. 3

# FIG. 4 (A)

# FIG. 4 (B)

# FIG. 5

# FIG.6(A)

# FIG.6(B)

# FIG.7

# FIG.8(A)

# FIG.8(B)

# FIG.9

FIG.11

FIG.10

FIG. 12

FIG. 13

EP 0 438 296 A2